# FASCICULE DE BREVET EUROPEEN

(11) **EP 2 795 833 B1**
(45) Date de publication et mention de la délivrance du brevet: **02.12.2020**
(21) Numéro de dépôt: 12816773.1
(22) Date de dépôt: 21.12.2012
(51) Int. Cl.: H04L 9/32

(54) **PROCEDE D'AUTHENTIFICATION ENTRE UN LECTEUR ET UNE ETIQUETTE RADIO**
AUTHENTIFIZIERUNGSVERFAHREN ZWISCHEN EINEM LESEGERÄT UND EINEM FUNKETIKETT
AUTHENTICATION METHOD BETWEEN A READER AND A RADIO TAG

(30) Priorité: 22.12.2011 FR 1162252
(43) Date de publication de la demande: 29.10.2014
(73) Titulaire: ORANGE, 75015 Paris (FR)
(72) Inventeur: ROBSHAW, Matthew, WA 98199 Seattle (US)
(86) Numéro de dépôt international: PCT/FR2012/053055
(87) Numéro de publication internationale: WO 2013/093373

(56) Documents cités:
- WO-A1-2010/149937
- DIVYAN M KONIDALA ET AL: "A Simple and Cost-effective RFID Tag-Reader Mutual Authentication Scheme", PROCEEDINGS OF INTERNATIONAL CONFERENCE ON RFID SECURITY (RFIDSEC)'07,, 1 juillet 2007 (2007-07-01), pages 1-12, XP007912467,
- AXEL POSCHMANN ET AL: "Lightweight Cryptography and RFID: Tackling the Hidden Overheads", 2 décembre 2009 (2009-12-02), INFORMATION, SECURITY AND CRYPTOLOGY Â ICISC 2009, SPRINGER BERLIN HEIDELBERG, BERLIN, HEIDELBERG, PAGE(S) 129 - 145, XP019147088, ISBN: 978-3-642-14422-6 alinéa [0003]
- ZHAOYU LIU ET AL: "True random number generator in RFID systems against traceability", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 janvier 2006 (2006-01-08), pages 620-624, XP010893171, DOI: 10.1109/CCNC.2006.1593098 ISBN: 978-1-4244-0085-0

## Description

L'invention concerne une technique d'authentification entre un lecteur et une étiquette radio.

L'invention trouve une application particulièrement intéressante dans le domaine de la radio-identification, de l'anglais "Radio Frequency Identification", ou "RFID".

La radio-identification est une technique pour stocker et récupérer des données à distance en utilisant des marqueurs appelés radio-étiquettes, ou étiquettes radio (on parle également de "tag RFID"). Une étiquette radio est un petit objet, tel qu'une étiquette auto-adhésive, qui peut être collée sur, ou incorporée dans des objets ou produits. Elle comprend une antenne associée à une puce électronique qui lui permet de recevoir et de répondre à des requêtes radio émises depuis un émetteur-récepteur appelé lecteur. On utilise par exemple les étiquettes radio pour identifier des personnes lorsque les étiquettes sont intégrées dans des passeports, dans des titres de transport ou dans des cartes de paiement, ou pour identifier des produits comme avec un code barre.

De manière classique, lorsqu'une étiquette passe à portée d'un lecteur radio, le lecteur interagit avec l'étiquette et interroge celle-ci. Lors d'une telle interrogation, le lecteur peut récupérer des informations propres à l'étiquette, comme un identifiant d'étiquette, ou classiquement des données qui participent à l'authentification de l'étiquette auprès d'un lecteur. Cette faculté pour un lecteur de récupérer des informations d'une étiquette de façon spontanée n'est pas sans inconvénient en termes de sécurité. En effet, il peut arriver que le lecteur soit corrompu et sous le contrôle d'une personne mal intentionnée, et dans certains cas la récupération spontanée d'informations d'une étiquette conduit à épuiser des ressources d'authentification propres à l'étiquette. Cela peut contribuer à perpétrer une attaque par déni de service à l'encontre de l'étiquette. Il est donc intéressant que l'étiquette puisse distinguer un lecteur corrompu d'un lecteur légitime, ou authentique. Ainsi, il est intéressant qu'une étiquette puisse authentifier un lecteur préalablement à une authentification de l'étiquette auprès du lecteur.

Le document WO2010/149937 divulgue une méthode d'authentification mutuelle entre une étiquette radio et un lecteur radio. Avec cette méthode, l'authentification de l'étiquette par le lecteur est conditionnée par le succès de l'authentification préalable du lecteur par l'étiquette. Pour authentifier le lecteur et pour s'authentifier auprès du lecteur, l'étiquette sélectionne un premier index i d'un coupon d'authentification d'étiquette xᵢ et envoie au lecteur une donnée destinée à déterminer la valeur du premier index i, ainsi que le coupon d'authentification d'étiquette xᵢ. Le lecteur récupère un coupon d'authentification du lecteur pré-calculé tⱼ associé à un deuxième index j. Le coupon d'authentification tⱼ du lecteur est mémorisé par le lecteur ; il a été pré-calculé en appliquant à la valeur j une fonction pseudo-aléatoire « PRF » (de l'anglais « Pseudo-Random Function »), paramétrée par une clé de régénération k'. Le lecteur génère également un défi c et envoie à l'étiquette le défi c, le coupon d'authentification du lecteur tⱼ et le deuxième index j. L'étiquette calcule une deuxième valeur d'authentification du lecteur tⱼ' en appliquant la fonction pseudo-aléatoire PRF qu'elle connaît, paramétrée par la clé de régénération k' dont elle dispose, au deuxième index j reçu du lecteur. L'étiquette compare alors la deuxième valeur d'authentification calculée tⱼ' au coupon d'authentification tⱼ reçu du lecteur. Si la deuxième valeur calculée tⱼ' est identique à celle reçue du lecteur alors, cela signifie que le lecteur a été correctement authentifié. L'authentification du lecteur par l'étiquette est basée sur de la cryptographie à clé secrète. Plus précisément l'authentification du lecteur repose sur l'utilisation par l'étiquette de la fonction pseudo-aléatoire PRF utilisée pour pré-calculer les coupons d'authentification du lecteur et sur la connaissance de la clé de régénération k'. La fonction pseudo-aléatoire est appliquée au deuxième index j reçu du lecteur pour calculer la deuxième valeur d'authentification du lecteur tⱼ' et vérifier ainsi la validité du coupon reçu du lecteur, prouvant ainsi que le lecteur est un lecteur légitime. Le succès de l'authentification du lecteur conditionne l'authentification de l'étiquette par le lecteur. Dans un exemple de réalisation, l'authentification de l'étiquette est mise en œuvre par le schéma connu d'authentification de cryptographie à clé publique « GPS » (ou « cryptoGPS »), du nom des inventeurs « Girault, Paillés, Poupard et Stern » [M.Girault, G.Poupard and J.Stern. « On the Fly Authentication and Signature Based on Groups of Unknown Order ». Journal of Cryptology, pages 463-488, volume 19, number 4, 2006]. Le schéma GPS est un schéma d'authentification à clé publique basé sur le problème du logarithme discret dans un groupe multiplicatif. GPS est classiquement utilisé pour qu'un dispositif, habituellement un dispositif qui a très peu de puissance de calcul, tel qu'une étiquette radio, s'authentifie auprès d'un second dispositif, typiquement un dispositif plus puissant, tel qu'un lecteur radio. Avec GPS, les calculs les plus coûteux sont effectués par le dispositif le plus puissant. Cette caractéristique rend le protocole GPS très adapté pour l'authentification d'étiquettes radio auprès de lecteurs radio. Au cours de l'authentification de l'étiquette, l'index i transmis initialement par l'étiquette au lecteur est alors avantageusement utilisé par l'étiquette pour calculer une réponse d'authentification au défi c envoyé par le lecteur. Ainsi, le procédé d'authentification mutuelle optimise l'utilisation des ressources de l'étiquette connues pour être limitées.

Une fois l'authentification mutuelle entre le lecteur et l'étiquette réalisée, d'éventuelles informations supplémentaires qui circulent entre l'étiquette et le lecteur sont transmises en clair. Cependant il peut être nécessaire de contrôler la transmission des informations entre le lecteur et l'étiquette. Par exemple, dans le cas d'étiquettes apposées sur des boîtes de médicaments, de telles informations destinées à être lues par le lecteur peuvent renseigner sur la destination du médicament en fournissant des adresses d'officines. De telles informations, sensibles, peuvent ainsi être interceptées sur la voie radio par une personne malintentionnée. La méthode d'authentification décrite précédemment ne permet pas de protéger la transmission des informations entre le lecteur et un dispositif contraint en termes de mémoire et de puissance de calcul, tel qu'une étiquette radio.

Un des buts de l'invention est de remédier à des insuffisances/inconvénients de l'état de la technique et/ou d'y apporter des améliorations.

A cette fin l'invention propose un procédé d'authentification d'un lecteur auprès d'une étiquette radio, comprenant les étapes suivantes, mises en œuvre par l'étiquette :
- une étape de réception d'une information chiffrée au moyen d'une opération réversible, paramétrée par un coupon d'authentification du lecteur, et d'une donnée permettant de déterminer un index d'identification du coupon d'authentification du lecteur,
- une opération de calcul d'un coupon courant d'authentification du lecteur en fonction de l'index,
- une opération de déchiffrement de l'information reçue chiffrée au moyen de l'opération réversible, paramétrée par le coupon courant d'authentification calculé,
- une opération de contrôle de l'information déchiffrée destinée à vérifier que le coupon courant calculé correspond au coupon d'authentification utilisé par le lecteur pour paramétrer l'opération réversible.

L'invention trouve son origine dans la transmission d'une information sensible entre le lecteur et l'étiquette. Cependant, le procédé de l'invention trouve une application plus large puisqu'il permet, en profitant de l'envoi sécurisé de l'information, de vérifier l'authenticité du lecteur. Ainsi, grâce au procédé de l'invention, le lecteur peut transmettre une information sensible à l'étiquette et l'étiquette peut s'assurer, avec cette transmission que le lecteur est authentique.

Le procédé de l'invention propose donc une authentification implicite du lecteur au moyen d'un canal sécurisé établi entre l'étiquette et le lecteur. En effet, avec le procédé de l'invention, les coupons d'authentification tⱼ du lecteur utilisés pour authentifier le lecteur auprès de l'étiquette, sont utilisés pour établir un canal sécurisé entre le lecteur et l'étiquette. La vérification du bon établissement du canal sécurisé par l'étiquette garantit alors l'authenticité du lecteur.

Cette authentification est réalisée par l'étiquette au cours de l'étape de contrôle. Un contrôle de l'information déchiffrée positif permet de vérifier que le coupon d'authentification du lecteur utilisé par le lecteur pour établir le canal sécurisé est le même que le coupon courant d'authentification calculé par l'étiquette.

L'établissement d'un canal sécurisé permet de transmettre une information du lecteur à l'étiquette sans aucun risque d'interception puisque l'information est transmise chiffrée. Les risques d'interception sont toujours importants dans le cas de communication radio.

Par ailleurs, il y a une mutualisation des échanges entre les deux entités, le lecteur et l'étiquette, qui au lieu de réaliser une authentification du lecteur par l'étiquette au moyen de premiers échanges, puis d'établir un canal sécurisé au moyen de deuxième échanges, réalisent ces deux opérations au cours d'un seul échange.

Avec le procédé de l'invention, les coupons d'authentification utilisés pour l'authentification du lecteur et pour l'établissement du canal sécurisé entre les deux entités ne nécessitent qu'un calcul de la part de l'étiquette, en l'espèce la régénération des coupons sur l'étiquette, les coupons étant ensuite utilisés pour le déchiffrement de l'information transmise chiffrée. Ce calcul était déjà présenté comme nécessaire dans un procédé d'authentification connu de l'art antérieur.

L'invention concerne aussi un procédé d'authentification d'un lecteur auprès d'une étiquette radio comprenant les étapes suivantes, mises en œuvre par le lecteur :
- une étape de sélection d'un coupon d'authentification du lecteur,
- une étape de chiffrement d'une information au moyen d'une opération réversible, paramétrée par le coupon d'authentification du lecteur,
- une étape d'envoi de l'information chiffrée et d'une donnée permettant de déterminer l'index du coupon d'authentification du lecteur.

Avantageusement, le procédé selon l'invention comprend :
- une étape de transmission par l'étiquette au lecteur d'un coupon d'authentification de l'étiquette pré-calculé et d'une donnée permettant de déterminer un index d'identification du coupon d'authentification de l'étiquette,
- une étape de finalisation de l'authentification de l'étiquette, ladite étape de finalisation n'étant exécutée que si le coupon courant calculé correspond au coupon d'authentification utilisé par le lecteur pour paramétrer l'opération réversible.

L'authentification du lecteur par l'étiquette est couplée à une authentification de l'étiquette par le lecteur conforme à une authentification cryptoGPS, connue de l'art antérieur. Ainsi, ce mode de réalisation fournit un protocole d'authentification mutuelle dans lequel le lecteur est authentifié préalablement à l'authentification de l'étiquette. Cette authentification mutuelle n'augmente pas le nombre de messages échangés entre l'étiquette et le lecteur au cours de l'authentification connue de l'étiquette. Le protocole, initialement à trois passes : un envoi de l'étiquette au lecteur, un envoi du lecteur à l'étiquette et une réponse envoyée de l'étiquette au lecteur, reste un protocole à trois passes.

Coupler l'authentification du lecteur par l'étiquette à une authentification de l'étiquette par le lecteur conforme au schéma GPS est avantageux car le procédé de l'invention tire partie des optimisations du schéma GPS, en particulier par l'utilisation de coupons pré-calculés au niveau de l'étiquette et au niveau du lecteur. Par ailleurs, le couplage du procédé selon l'invention avec GPS n'induit pas de coût d'implémentation supplémentaire pour l'étiquette. Dans un exemple de réalisation, l'information comprend une valeur de redondance de n bits.

L'information de redondance est avantageusement utilisée pour vérifier que l'opération réversible est correctement réalisée, c'est-à-dire en utilisant le bon coupon d'authentification tⱼ du lecteur et que le résultat de l'opération est transmis correctement entre les deux entités. La valeur de redondance padd comprend n bits, par exemple n bits positionnés à zéro. Ainsi, lorsque la valeur de redondance comprise dans l'information transmise chiffrée du lecteur à l'étiquette est contrôlée par l'étiquette et que le contrôle est positif, alors cela signifie que l'opération réversible a été correctement réalisée et que la transmission s'est bien passée. Cela signifie également que le lecteur est authentique avec une probabilité de 2⁻ⁿ.

Avantageusement, l'information comprend une information sensible de m bits, concaténée à une valeur de redondance de n bits.

Ainsi, le canal sécurisé établi entre le lecteur et l'étiquette peut également être utilisé pour transmettre une information sensible du lecteur à l'étiquette. L'information sensible peut alors être mémorisée par l'étiquette. Ainsi, le procédé permet d'inscrire des informations sur une étiquette radio de manière sûre.

Avantageusement, l'opération réversible consiste en un OU EXCLUSIF entre le coupon d'authentification du lecteur et l'information.

Dans ce mode de réalisation, l'opération réversible utilisée pour établir le canal sécurisé entre le lecteur et l'étiquette, en l'espèce un OU EXCLUSIF, utilise n + m bits des coupons d'authentification tᵢ du lecteur comme masque d'une information à transmettre de manière sécurisée entre les deux entités. Ce mode de réalisation est très avantageux car l'opération de OU EXCLUSIF ne nécessite pas de circuit supplémentaire sur l'étiquette. En effet, le OU EXCLUSIF est une opération de base disponible sur les circuits tels que les étiquettes radio. Ainsi, la mise en œuvre du déchiffrement de l'information reçue chiffrée, voire le chiffrement d'une deuxième information à l'attention du lecteur n'est donc pas coûteux pour un dispositif tel qu'une étiquette radio qui est réputé pour être très contraint en termes de mémoire et de puissance de calcul.

Dans un autre exemple de réalisation, l'opération réversible est l'algorithme de chiffrement par blocs PRESENT, paramétré par le coupon d'authentification du lecteur et appliqué à l'information.

Cette variante de réalisation propose un algorithme de chiffrement par blocs adapté pour être mis en œuvre sur des étiquettes radio. Il est en effet très léger en termes d'implémentation. Par ailleurs, l'algorithme PRESENT est sûr en termes de sécurité. Un même coupon d'authentification tᵢ du lecteur, ou plus précisément les mêmes bits d'un coupon peuvent être utilisés aussi bien pour transmettre une information sécurisée du lecteur à l'étiquette que pour transmettre une deuxième information sécurisée de l'étiquette au lecteur.

Dans un exemple de réalisation, dans lequel l'opération réversible est un OU EXCLUSIF, l'étape de finalisation de l'authentification de l'étiquette comprend, lorsque le coupon courant d'authentification du lecteur comprend de premiers n + m bits suivis de m' deuxièmes bits :
- une étape de transmission de l'étiquette au lecteur d'une deuxième information sensible de m' bits, l'étape de transmission comprenant :
- une opération de OU EXCLUSIF entre les m' deuxièmes bits du coupon d'authentification courant du lecteur et les m' bits de la deuxième information,
- une étape d'envoi de la deuxième information sensible chiffrée.

Dans cet exemple de réalisation, correspondant au cas où l'opération réversible REV consiste en un OU EXCLUSIF, le masque utilisé pour transmettre une première information sensible de m bits du lecteur à l'étiquette, puis une deuxième information sensible de m bits de l'étiquette au lecteur, est différent d'un envoi à un autre, bien que basé sur le même coupon d'authentification tᵢ du lecteur de n + m bits,. Cette précaution est nécessaire pour garantir la sécurité de la transmission, notamment de la transmission de la deuxième information sensible. Ainsi, dans cet exemple de réalisation, bien qu'un seul coupon d'authentification tᵢ soit utilisé, la sécurité de la transmission est garantie par l'utilisation de plusieurs masques correspondant à des blocs de n+m bits du coupon d'authentification tⱼ.

Dans un autre exemple de réalisation, ou l'opération réversible est l'algorithme PRESENT, l'étape de finalisation de l'authentification de l'étiquette comprend :
- une étape de transmission d'une deuxième information sensible de l'étiquette au lecteur, l'étape de transmission comprenant :
   - une application de l'algorithme de chiffrement PRESENT, paramétré par le coupon d'authentification (tⱼ') du lecteur, à la deuxième information sensible,
   - une étape d'envoi au lecteur de la deuxième information sensible chiffrée.

Dans cet exemple de réalisation, l'opération réversible est un algorithme de chiffrement par blocs. La sécurité inhérente à ces algorithmes permet d'utiliser les mêmes bits d'un coupon d'authentification du lecteur comme clé unique de chiffrement de l'algorithme que ce soit pour envoyer une première information sensible du lecteur à l'étiquette qu'une deuxième information sensible du lecteur à l'étiquette.

Avantageusement, le coupon d'authentification du lecteur tᵢ est obtenu par application d'un algorithme de chiffrement par blocs en mode OFB, paramétré par une clé de régénération, à l'index.

Calculer les coupons d'authentification tᵢ du lecteur au moyen d'un algorithme de chiffrement par blocs en mode OFB ou en mode CTR permet de contrôler la taille des coupons générés. En effet, une itération de l'algorithme de chiffrement produit un bloc de données qui est fourni en entrée de l'itération suivante de l'algorithme qui produit un deuxième bloc. La suite pseudo-aléatoire finale est obtenue par concaténation des blocs produits. Ainsi, plus le nombre d'itérations effectué par l'algorithme de chiffrement est grand et plus la suite pseudo-aléatoire produite est longue. Ainsi, le nombre d'itérations est à définir en fonction de la taille souhaitée des coupons d'authentification tᵢ du lecteur. On comprend que ce mode de réalisation est particulièrement adapté lorsque l'opération réversible REV est un OU EXCLUSIF. En effet, dans ce cas, n + m bits d'un coupon sont utilisés pour transmettre une information. La taille du coupon est donc à prévoir en fonction du nombre d'échanges sécurisés prévus entre les deux entités et de la taille de l'information sensible à transmettre.

L'invention porte également sur un étiquette radio adaptée pour authentifier un lecteur radio (R) et pour s'authentifier auprès d'un lecteur radio, et comprenant :
- des moyens de réception, agencés pour recevoir une information chiffrée au moyen d'une opération réversible paramétrée par le coupon d'authentification du lecteur, et une donnée permettant de déterminer un index d'identification du coupon d'authentification du lecteur,
- des moyens de calcul, agencés pour calculer un coupon courant d'authentification du lecteur en fonction de l'index,
- des moyens de déchiffrement, agencés pour déchiffrer l'information reçue chiffrée au moyen de l'opération réversible paramétrée par le coupon courant d'authentification calculé,
- des moyens de contrôle, agencés pour contrôler l'information et vérifier que le coupon courant calculé correspond au coupon d'authentification utilisé pour paramétrer l'opération réversible.

L'invention concerne aussi un lecteur radio adapté pour s'authentifier auprès d'au moins une étiquette radio et pour authentifier l'étiquette, ledit lecteur comprenant :
- des moyens de sélection, agencés pour sélectionner un coupon d'authentification du lecteur,
- des moyens de chiffrement, agencés pour chiffrer une information au moyen d'une opération réversible, paramétrée par le coupon d'authentification du lecteur,
- des moyens d'envoi, agencés pour envoyer l'information chiffrée et une donnée permettant de déterminer un index d'identification du coupon d'authentification du lecteur.

L'invention porte également sur un système d'authentification radio comprenant :
- un lecteur radio selon l'invention, et
- au moins une étiquette radio selon l'invention.

L'invention concerne également un programme d'ordinateur destiné à être installé dans une mémoire d'un lecteur radio, comprenant des instructions pour la mise en œuvre des étapes du procédé d'authentification mutuelle d'une étiquette radio et d'un lecteur selon l'invention qui sont exécutées par le lecteur, lorsque le programme est exécuté par un processeur.

Enfin, l'invention concerne un support de données dans lequel est enregistré le programme selon l'invention.

De nombreux détails et avantages de l'invention seront mieux compris à la lecture de la description d'un mode particulier de réalisation en référence aux dessins annexés donnés à titre non limitatif, et dans lesquels :
- la figure 1 représente les étapes d'un schéma d'authentification connu d'une étiquette auprès d'un lecteur, en l'espèce le schéma GPS, selon un état antérieur de la technique ;
- la figure 2 représente les étapes d'un schéma d'authentification entre un lecteur radio et une étiquette radio selon un premier exemple de réalisation de l'invention ;
- la figure 3 représente un exemple particulier de réalisation d'une étiquette radio agencée pour authentifier un lecteur radio selon l'invention et décrit en relation avec la figure 4 ;
- la figure 4 représente un exemple de réalisation d'un lecteur radio agencé pour s'authentifier auprès d'une étiquette radio selon la figure 3.

Le procédé d'authentification entre un lecteur et une étiquette radio, ou étiquettes « RFID » (de l'anglais « Radio Frequency Identification »), selon l'invention peut être utilisé en conjonction avec une variété de schémas d'authentification d'une étiquette auprès d'un lecteur. De tels schémas peuvent être basés sur de la cryptographie à clé publique ou de la cryptographie à clé secrète. Cependant, un schéma connu d'identification d'une étiquette auprès d'un lecteur, appelé "GPS", abréviation de "Girault, Paillés, Poupard et Stern", noms des inventeurs, est particulièrement bien adapté pour être utilisé en relation avec le procédé selon l'invention car il n'induit pas de coût d'implémentation pour l'étiquette dont les ressources sont connues pour être limitées. Le schéma GPS est une technique d'authentification à clé publique. C'est un protocole de type "zero-knowledge" (ou "à divulgation nulle de connaissance") dont la sécurité repose sur la difficulté du logarithme discret dans un groupe. La mise en œuvre de ce schéma peut reposer par exemple sur de la cryptographie à base de courbe elliptique.

Ce schéma est habituellement utilisé pour qu'un dispositif très peu puissant, en termes de mémoire ou/et de puissance de calcul, s'authentifie auprès d'un deuxième dispositif, plus puissant. Le protocole est tel que le coût de l'authentification pour le dispositif le moins puissant peut être énormément réduit au moyen d'une série d'optimisations. Par exemple, une optimisation du schéma GPS repose sur un mode dit "à coupons". Ce mode consiste à calculer antérieurement à une session d'authentification tout ce qui peut l'être, laissant un minimum d'opérations à effectuer pendant la session d'authentification proprement dite. Cela rend le protocole GPS très bien adapté pour les applications basées sur l'utilisation d'étiquettes radio.

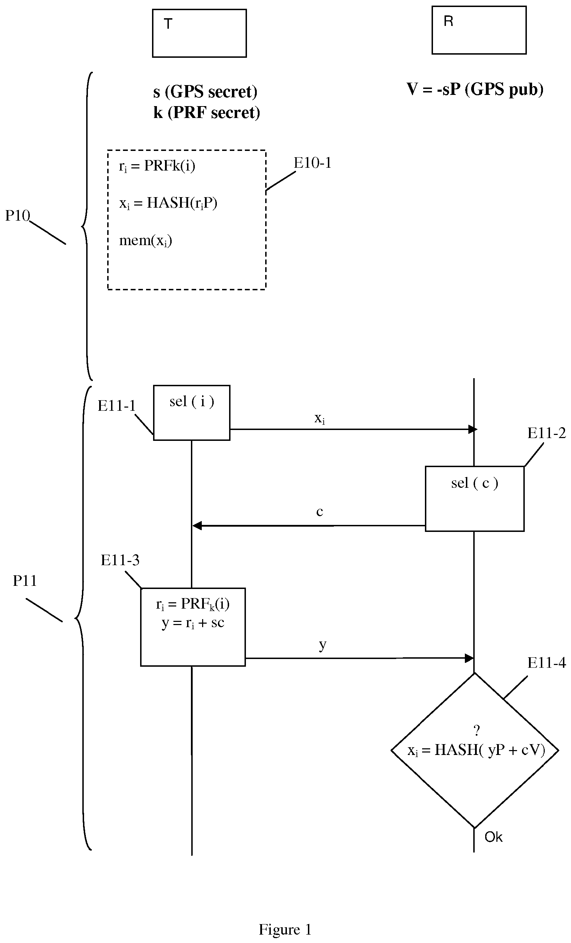

Ainsi, dans un premier temps, et dans un but de faciliter la compréhension du procédé d'authentification mutuelle selon l'invention qui repose, pour l'authentification de l'étiquette par le lecteur sur le schéma GPS, il est décrit en relation avec la figure 1, un exemple de mise en œuvre d'un schéma d'authentification GPS d'une étiquette radio auprès d'un lecteur, selon un état antérieur de la technique. L'exemple de mise en œuvre de GPS décrit ici est basé sur les courbes elliptiques ; il utilise un sous-groupe de points générés par un point P sur une courbe E. La mise en œuvre décrite ici utilise des coupons d'authentification d'étiquette et une régénération d'aléas associés à chacun de ces coupons par l'étiquette, qui constituent une optimisation dans un schéma GPS de base. Dans cet exemple de réalisation, les calculs arithmétiques sur les courbes elliptiques sont exécutés sur le lecteur, alors que seulement des opérations arithmétiques de base sont exécutées par l'étiquette. On comprend que cet exemple est très intéressant en termes de performance et d'espace d'implémentation pour l'étiquette.

Selon ce schéma, un système d'authentification comprend au moins une étiquette T adaptée pour s'authentifier auprès d'un lecteur R lorsqu'elle passe à proximité du lecteur R.

Le schéma comprend de manière classique deux phases : une phase de configuration P10 au cours de laquelle des données d'authentification sont calculées ou/et fournies à l'étiquette T et au lecteur R, et une phase d'authentification P11 au cours de laquelle l'étiquette T s'authentifie auprès du lecteur R. La phase de configuration P10 peut n'être exécutée qu'une fois dans la vie du système. La phase d'authentification P11 est exécutée à chaque authentification de l'étiquette auprès du lecteur R.

Au cours de la phase de configuration P10, un couple de clés GPS (s, V) est généré. Le couple comprend une clé secrète s et une clé publique associée V. La clé secrète s, propre à l'étiquette T, est stockée dans l'étiquette T et n'est jamais extraite, ni transmise hors de l'étiquette T. La clé publique V est accessible par le lecteur R. Les clés s et V sont liées selon la formule suivante : V = *-sP*, où P est un point sur la courbe elliptique E, connu du lecteur R. Autrement dit, la clé publique V est calculée selon l'addition sur la courbe elliptique en additionnant le point P, s fois. Dans le mode de réalisation du schéma GPS décrit ici, parfois appelé mode "coupons réduits", une deuxième clé secrète k, appelée clé de régénération, est installée sur l'étiquette T. Elle est utilisée comme paramètre d'une fonction pseudo-aléatoire "PRF" (pour "Pseudo-Random Function") installée sur l'étiquette T.

Au cours de la phase de configuration P10, dans une étape E10-1 de configuration, il est pré-calculé un nombre prédéterminé p de valeurs, appelées habituellement coupons d'authentification de l'étiquette, et notées xᵢ, 1≤ i ≤ p. On note xᵢ le coupon d'indice i. L'indice i est un index d'identification du coupon xᵢ. Pour calculer le coupon xᵢ, il est généré un aléa rᵢ au moyen de la fonction pseudo-aléatoire PRF paramétrée par la clé de régénération k et appliquée à l'index i (c'est-à-dire : *rᵢ* = *PRFₖ*(*i*))*.* Le coupon xᵢ d'authentification de l'étiquette est ensuite calculé selon la formule suivante : *xᵢ* = *HASH*(*rᵢP*), où HASH est une fonction de hachage connue, appliquée à l'addition sur la courbe elliptique du point P, rᵢ fois. Cette addition, et dans une moindre mesure l'évaluation de la fonction de hachage HASH sont des opérations coûteuses en termes de puissance de calcul. Ainsi, habituellement les coupons xᵢ sont pré-calculés par une entité de calcul (non représentée) du système d'authentification, différente de l'étiquette T et du lecteur R. Les coupons d'authentification de l'étiquette xᵢ sont ensuite stockés sur l'étiquette T, dans une mémoire non représentée de l'étiquette T, en vue d'être utilisés au cours d'authentifications auprès du lecteur R.

Au cours de la phase P11 d'authentification, dans une étape initiale E11-1 de sélection et d'envoi, il est sélectionné par l'étiquette T un coupon xᵢ d'index i. En fin d'étape 11-1, le coupon sélectionné xᵢ est envoyé au lecteur R.

Dans une étape E11-2 de sélection et d'envoi d'un défi, il est généré par le lecteur R un défi c. Le défi c est généré aléatoirement. En fin d'étape E11-2, le défi c est envoyé par le lecteur R à l'étiquette T.

Dans une étape E11-3 de régénération et de calcul, l'aléa rᵢ est régénéré par l'étiquette T. A cette fin, la fonction pseudo-aléatoire PRF installée sur l'étiquette T et paramétrée par la clé secrète de régénération k est appliquée à l'index i qui identifie le coupon xᵢ. Il est connu que la fonction pseudo-aléatoire nécessite pour l'étiquette T peu de puissance de calcul. Il est ensuite calculé par l'étiquette T une réponse y au défi c au moyen de la formule suivante : *y* = *rᵢ* + *s c*. La réponse y est la somme de l'aléa rᵢ et du produit scalaire de la clé secrète s et du défi c. En fin d'étape E11-3, la réponse y est envoyée au lecteur R.

Dans une étape E11-4 de vérification, il est vérifié par le lecteur R que le coupon xᵢ reçu de l'étiquette en fin d'étape E11-1 est égal à une valeur obtenue en appliquant la fonction de hachage HASH à l'addition sur la courbe elliptique du point P, y fois, avec le produit scalaire du défi c et de la clé publique V : xᵢ = *HASH*(*yP* + *cV*)*.*

Si la vérification est positive (branche Ok sur la figure 1), alors l'étiquette T s'est correctement authentifiée auprès du lecteur R.

La fonction HASH est par exemple la fonction SHA-1 ou la fonction SHA-2 (pour "Secure Hash Algorithm").

Habituellement, après la phase d'initialisation P10, la clé secrète de régénération k n'est présente que sur l'étiquette, elle ne quitte jamais l'étiquette et n'est pas destinée à être partagée avec une autre entité, hormis éventuellement l'entité de calcul apte à pré-calculer les coupons d'authentification de l'étiquette xᵢ. La clé secrète de régénération k est différente de la clé secrète s. Cependant, dans un exemple de mise en œuvre du schéma GPS, elle peut être dérivée de la clé secrète s.

Dans un autre exemple de mise en œuvre du schéma GPS (non représenté) qui constitue une autre optimisation du schéma, les coupons d'authentification de l'étiquette xᵢ sont pré-calculés et stockés sur le lecteur, ou délivrés au lecteur par l'entité de calcul à travers un canal de communication. Dans ce cas, l'étiquette peut ne transmettre au cours de l'étape E11-1 de sélection et d'envoi que l'index i du coupon xᵢ.

Dans une variante de réalisation du schéma GPS non décrite, les coupons d'authentification d'étiquette qui sont stockés sur l'étiquette T sont des couples (xᵢ, rᵢ), ou "coupons non réduits". Dans cette variante, les aléas rᵢ sont donc stockés dans l'étiquette et ne sont donc pas régénérés lors de l'authentification, comme c'est le cas dans le schéma décrit précédemment. On remarque que cette variante est moins intéressante en termes d'occupation de l'espace mémoire de l'étiquette T, puisqu'elle nécessite que l'étiquette stocke plus d'informations.

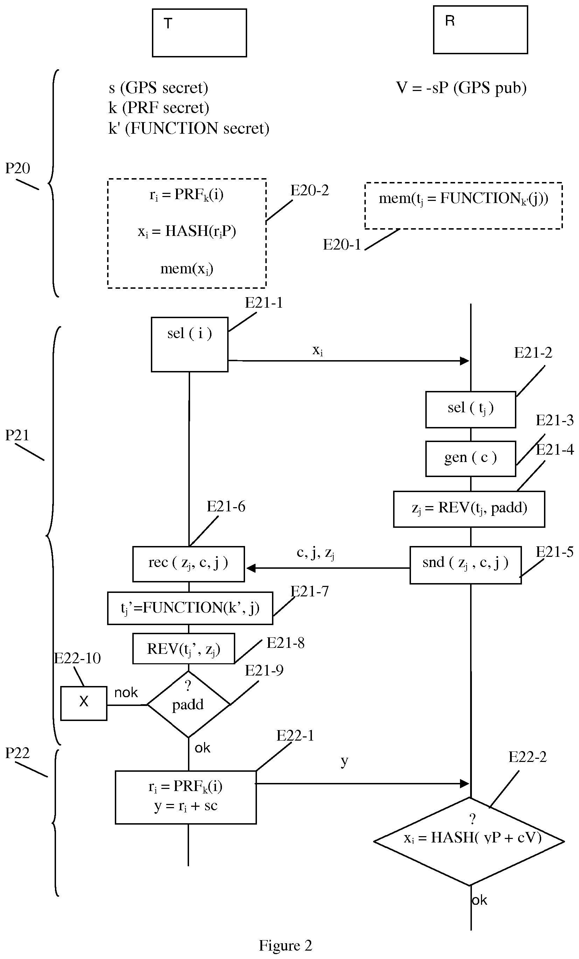

Un procédé d'authentification entre un lecteur radio et une étiquette radio, selon un premier exemple de réalisation de l'invention, va maintenant être décrit en relation avec la figure 2.

Bien que le procédé soit illustré ici avec le protocole d'authentification GPS en ce qui concerne l'authentification de l'étiquette par le lecteur, le procédé ne se limite pas à cet exemple. Ainsi, le procédé selon l'invention peut comprendre une authentification de l'étiquette par le lecteur conforme à d'autres modèles d'authentification d'une étiquette par un lecteur. Les protocoles d'authentification d'une étiquette par un lecteur peuvent être des protocoles basés sur de la cryptographie à clé publique ou à clé secrète. Cependant, l'authentification GPS est particulièrement adaptée dans le cas d'étiquettes contraintes en termes de mémoire et de puissance de calcul.

Le procédé selon l'invention comprend une phase de configuration P20 au cours de laquelle des données d'authentification sont calculées et/ou fournies à l'étiquette T et au lecteur R, ainsi qu'une première phase d'authentification P21 et le cas échéant une deuxième phase d'authentification P22 au cours desquelles le lecteur R est authentifié par l'étiquette T, puis l'authentification de l'étiquette T par le lecteur R est finalisée. La phase de configuration P20 peut n'être exécutée qu'une fois dans la vie du système. La phase d'authentification P21, et le cas échéant la phase P22, sont exécutées à chaque authentification entre l'étiquette et le lecteur R. On note que les deux phases d'authentification P21 et P22 sont entrelacées, c'est-à-dire que des données échangées au cours de la première phase d'authentification P21 sont utilisées pour effectuer la deuxième phase d'authentification P22. Cependant, on considère pour simplifier que la première phase d'authentification P21 est dédiée à l'authentification du lecteur R par l'étiquette T et que la deuxième phase d'authentification P22 est dédiée à l'authentification de l'étiquette par le lecteur. Ainsi, au cours de la première phase d'authentification P21, le lecteur R est authentifié par l'étiquette T selon l'invention à travers un canal sécurisé établi entre le lecteur R et l'étiquette T. Si l'authentification du lecteur R réussit, alors l'authentification se poursuit avec la deuxième phase d'authentification P22 au cours de laquelle il est procédé à l'authentification de l'étiquette T par le lecteur R à travers éventuellement le canal sécurisé établi entre les deux entités.

Au cours de la phase de configuration P20, un couple de clés GPS (s, V) est généré pour l'étiquette T. Le couple comprend une clé secrète s et une clé publique associée V. La clé secrète s est stockée dans l'étiquette T et n'est jamais transmise hors de l'étiquette T. La clé publique V est accessible par le lecteur R. Les clés s et V sont liées selon la formule suivante : *V* = *-sP*, où P est un point sur une courbe elliptique E. Autrement dit, la clé publique V est obtenue par addition du point P, s fois. Dans le mode de réalisation du schéma GPS décrit ici, parfois appelé mode "coupons réduits", une deuxième clé secrète k, appelée clé de régénération de coupons d'authentification de l'étiquette, ou première clé de régénération, et comparable à la clé secrète k selon la figure 1, est stockée dans l'étiquette T. Elle est utilisée comme paramètre d'une première fonction pseudo-aléatoire PRF installée sur l'étiquette T. La première clé secrète de régénération k est différente de la clé secrète s. Cependant, elle peut être dérivée de la clé secrète s. Une troisième clé secrète k', appelée clé de régénération de coupons d'authentification du lecteur, ou seconde clé de régénération, est stockée dans l'étiquette T. Elle est utilisée comme paramètre d'une deuxième fonction, notée FUNCTION, connue de l'étiquette T et adaptée pour générée des suites pseudo-aléatoires.

Lors de la phase de configuration P20, il est également calculé un nombre prédéterminé q de coupons d'authentification tⱼ du lecteur, 1 ≤ j ≤ q. Les q coupons d'authentification tⱼ du lecteur sont préalablement calculés de manière pseudo-aléatoire par une entité de calcul, non représentée sur la figure 2, selon la formule suivante : *tⱼ* = *FUNCTION_{k'}*(*j*)*.* Autrement dit, chaque coupon d'authentification tⱼ résulte de l'application à l'index j de la deuxième fonction FUNCTION, paramétrée par la deuxième clé de régénération k'. Les coupons d'authentification tⱼ du lecteur, c'est-à-dire les éléments sortants de la deuxième fonction FUNCTION, sont des suites de bits pseudo-aléatoires. Par convention, on note que les coupons d'authentification tⱼ ont une taille d'au moins n + m bits, avec n ≥ 1, et m ≥ 0.

Les coupons d'authentification tⱼ du lecteur sont ensuite stockés dans une mémoire de coupons du lecteur R, non représentée, au cours d'une étape E20-1 de mémorisation. On note que dans le mode de réalisation particulier décrit en relation avec la figure 2, le lecteur R ne possède pas la seconde clé de régénération k' des coupons d'authentification tⱼ du lecteur et n'est donc pas adapté pour calculer les coupons d'authentification tⱼ.

Au cours de la phase de configuration P20, dans une étape E20-2 de configuration, comparable à l'étape de configuration E10-1 selon la figure 1, il est pré-calculé un nombre prédéfini p de coupons d'authentification de l'étiquette xᵢ, 1≤i≤p. Pour calculer le coupon xᵢ, l'entité de calcul génère un aléa rᵢ au moyen de la première fonction pseudo-aléatoire PRF paramétrée par la première clé de régénération k et appliquée à l'index i. En d'autres termes, *rᵢ* = *PRFₖ*(*i*)*.* Le coupon d'authentification xᵢ de l'étiquette est alors calculé selon la formule suivante: *xᵢ* = *HASH*(*rᵢP*)*.* Autrement dit, le coupon d'authentification xᵢ de l'étiquette T est le résultat de la fonction de hachage HASH appliquée à l'addition du point P, rᵢ fois. Les coupons d'authentification xᵢ d'étiquette sont pré-calculés par l'entité de calcul et sont stockés sur l'étiquette T en vue d'être utilisés au cours d'authentifications de l'étiquette T auprès du lecteur R. La fonction HASH est par exemple la fonction SHA-1, ou la fonction SHA-2.

Dans la première phase d'authentification P21, dans une étape initiale E21-1 de sélection et d'envoi, l'étiquette T sélectionne un premier index i de coupon d'authentification xᵢ d'étiquette et envoie au lecteur R une première donnée destinée à déterminer le premier index i utilisé par l'étiquette, ainsi que le coupon d'authentification xᵢ.

Dans une étape E21-2 de sélection d'un coupon d'authentification tⱼ du lecteur, le lecteur R sélectionne un coupon pré-calculé tⱼ associé à un deuxième index j. Par exemple, les coupons d'authentification tⱼ du lecteur sont mémorisés dans une table à q-entrées, dont la j-ième entrée comprend le coupon tⱼ d'authentification du lecteur.

Dans une étape suivante E21-3 de génération d'un défi c, le lecteur R génère de manière aléatoire un défi c.

Dans une étape suivante E21-4 de chiffrement, une opération réversible REV, paramétrée par le coupon d'authentification tⱼ du lecteur est appliquée à une information comprenant au moins une valeur de redondance prédéfinie padd de n bits (le terme habituellement utilisé pour la valeur de redondance est le terme anglais « padding »). En d'autres termes, le chiffrement de l'information est réalisé en appliquant l'opération réversible REV au coupon d'authentification tⱼ du lecteur et à l'information qui comprend la valeur de redondance. Par exemple la valeur de redondance consiste en n bits positionnés à zéro ; elle est notée padd = [000...000]. On rappelle qu'une opération OP*ₜ* est réversible s'il existe une deuxième opération, notée OP*ₜ*⁻¹, telle que, en appliquant successivement l'opération réversible OP*ₜ* à un élément x, puis la deuxième opération OP*ₜ*⁻¹ au résultat obtenu, alors on obtient x. En d'autres termes, OP*ₜ*⁻¹(OP*ₜ*(x)) = x. Dans un premier exemple de réalisation de l'invention, l'opération réversible REV consiste en un OU EXCLUSIF bit à bit, noté ⊕, entre le coupon d'authentification tⱼ du lecteur et l'information qui consiste en la valeur de redondance prédéfinie padd. On dit habituellement que le coupon d'authentification tⱼ est utilisé comme masque de l'information. Le lecteur R calcule alors une information masquée, ou chiffrée, notée zⱼ, en opérant un OU EXCLUSIF entre le coupon d'authentification tⱼ du lecteur et l'information égale à la valeur de redondance padd. Ainsi, il est calculé, zⱼ = tⱼ ⊕ [000...000]. On remarque que dans le cas où l'opération réversible OP*ₜ* est un OU EXCLUSIF, la deuxième opération, notée OP*ₜ*⁻¹, consiste également en un OU EXCLUSIF. Ainsi, dans ce premier exemple, OP*ₜ*⁻¹ = OP*ₜ*.

Dans une étape E21-5 d'envoi, l'information chiffrée zⱼ calculée précédemment, le défi c généré au cours de l'étape E21-3 et une deuxième donnée destinée à déterminer la valeur du deuxième index j utilisé par le lecteur R sont envoyés à l'étiquette T. Par exemple, la deuxième donnée est le deuxième index j. Ainsi, au lieu d'utiliser les coupons d'authentification tⱼ du lecteur en les transmettant en clair directement à l'étiquette, comme c'est le cas dans la méthode d'authentification mutuelle entre le lecteur et l'étiquette décrite dans la demande WO2010/149937, les coupons d'authentification tⱼ du lecteur sont transmis chiffrés à l'étiquette T.

Dans une étape E21-6 de réception, l'information chiffrée zⱼ, le défi c et le deuxième index j sont reçus par l'étiquette T.

Dans une étape E21-7 de régénération du coupon d'authentification du lecteur, l'étiquette T calcule un coupon courant d'authentification tⱼ' du lecteur en appliquant la deuxième fonction FUNCTION qu'elle connaît, paramétrée par la deuxième clé de régénération k' qu'elle possède au deuxième index j qu'elle a reçu au cours de l'étape précédente.

Dans une étape E21-8 de déchiffrement, l'étiquette T déchiffre l'information zⱼ reçue du lecteur R au cours de l'étape E21-5 au moyen de l'opération réversible REV, paramétrée par le coupon courant tⱼ' calculé au cours de l'étape précédente. En d'autres termes l'étiquette T calcule REV(tⱼ', zⱼ). Dans l'exemple décrit ici, l'étiquette calcule donc tⱼ' ⊕ zⱼ. On remarque qu'en utilisant une opération de OU EXCLUSIF, aucun circuit supplémentaire n'est nécessaire sur l'étiquette puisque le OU EXCLUSIF est une opération basique d'un circuit électronique tel qu'une étiquette radio. Ainsi, le procédé selon l'invention n'induit pas de composant supplémentaire sur l'étiquette T pour exécuter cette opération de déchiffrement.

Dans une étape E21-9 de contrôle de l'information, l'étiquette T vérifie l'information déchiffrée. On comprend qu'en déchiffrant l'information chiffrée zⱼ = REV(tⱼ', padd) au moyen de l'opération réversible REV, paramétrée par le coupon d'authentification courant tⱼ' calculé par l'étiquette T, et donc en calculant REV(tⱼ', REV(tⱼ, padd)), les n premiers bits obtenus correspondent à la valeur de redondance padd à partir du moment où le coupon d'authentification tⱼ sélectionné par le lecteur est égal au coupon courant tⱼ' calculé par l'étiquette. Ainsi, dans l'étape de contrôle, l'étiquette T vérifie que les n premiers bits du résultat du déchiffrement de l'information chiffrée zⱼ sont égaux à la valeur de redondance padd.

Dans un premier cas où le contrôle de l'information est positif (branche ok sur la figure 2), c'est-à-dire dans un cas où les n premiers bits obtenus sont égaux à la valeur de redondance padd, cela signifie que le coupon courant tⱼ' calculé par l'étiquette correspond au coupon tⱼ utilisé par le lecteur R pour chiffrer l'information. En d'autres termes cela signifie que le lecteur R s'est correctement authentifié. Plus précisément, du fait de l'utilisation de la valeur de redondance padd de n bits, la probabilité que le lecteur R soit authentique est de 2⁻ⁿ.

Dans une étape E22-1 de finalisation de l'authentification, propre à la phase d'authentification P22 de l'étiquette, l'étiquette régénère l'aléa rᵢ en appliquant la première fonction pseudo-aléatoire PRF, paramétrée par la première clé de régénération k, au premier index i, sélectionné au cours de l'étape E21-1 de sélection. Puis, l'étiquette T calcule une réponse y au défi c reçu du lecteur R. L'étape E22-1 est comparable à l'étape E11-3 de régénération et de calcul selon la figure 1. En fin d'étape E22-1, l'étiquette T envoie au lecteur R la réponse y calculée.

Dans une étape E22-2 de vérification, comparable à l'étape de vérification E11-4 selon la figure 1, il est vérifié que le coupon d'authentification xᵢ reçu de l'étiquette T au terme de l'étape E21-1 est égal à la valeur obtenue en appliquant la fonction de hachage HASH à l'addition sur la courbe elliptique du point P, y fois, avec le produit scalaire du défi c et de la clé publique V : xᵢ = *HASH* (*yP* + *cV*). Si la vérification est positive (branche ok sur la figure 2), alors l'étiquette T s'est correctement authentifiée auprès du lecteur R, après avoir authentifié le lecteur R.

Dans un deuxième cas où la vérification de l'information est négative (branche nok sur la figure 2), c'est-à-dire dans un cas où les n premiers bits obtenus en déchiffrant l'information chiffrée zⱼ ne sont pas égaux à la valeur de redondance padd, cela signifie que le lecteur R n'est pas correctement authentifié. Dans une étape E21-10 de fin, le procédé s'arrête. En effet, la phase d'authentification de l'étiquette T n'a pas lieu d'être puisque le lecteur R n'est pas authentique.

On remarque que lorsque l'authentification du lecteur R échoue, la réponse au défi c, y, n'est pas envoyée au lecteur R. Ainsi, le coupon d'authentification xᵢ de l'étiquette, bien qu'envoyé au lecteur au cours de l'étape E21-1 n'est pas consommé. Il peut être réutilisé lors d'une authentification ultérieure.

Dans un deuxième exemple de réalisation de l'invention, non représenté sur la figure 2, l'opération réversible REV est une opération de OU EXCLUSIF et l'information qui est chiffrée au cours de l'étape de chiffrement E21-4 comprend la valeur de redondance padd, concaténée à une information sensible info_s que le lecteur R souhaite transmettre à l'étiquette T de façon sécurisée. En d'autres termes, dans cet exemple, zⱼ = REV(tⱼ, ([000...000] Il info_s)), ou zⱼ = tⱼ ⊕ ([000...000] ∥ info_s), où '∥' représente la concaténation. L'information sensible info_s est une donnée de m bits. Ainsi, l'information sensible info_s est transmise masquée par les n + m premiers bits du coupon d'authentification tⱼ. Elle est donc transmise de manière sécurisée.

Lorsque l'information chiffrée zⱼ est reçue par l'étiquette T au cours de l'étape E21-6 de réception, elle est déchiffrée par l'étiquette T conformément à l'étape E21-8 de déchiffrement. L'étiquette connaissant la valeur de redondance padd, elle recouvre aisément l'information sensible info_s après contrôle de la valeur de redondance. Ainsi, dans ce deuxième exemple de réalisation, le canal sécurisé établi entre le lecteur et l'étiquette T au cours de l'authentification du lecteur par l'étiquette permet non seulement de vérifier que le lecteur R est authentique mais également de transmettre de manière sécurisée une information sensible info_s. L'étiquette peut alors mémoriser l'information sensible info_s en mémoire. Dans le cas d'étiquettes radio apposées sur des boîtes de médicaments, l'information sensible peut consister en des adresses d'officines où doivent être livrées les boîtes.

Dans une variante de réalisation de l'invention, où l'opération réversible REV est un OU EXCLUSIF, l'étiquette T peut également communiquer avec le lecteur R de manière sécurisée et transmettre au lecteur R une deuxième information sensible info_s2 de m' bits au cours de l'étape E22-1 de finalisation de l'authentification. La deuxième information sensible info_s2 peut consister en la réponse au défi c, y, calculée par l'étiquette T au cours de l'étape E22-1, ou toute autre information sensible qu'il est important de ne pas transmettre en clair sur la voie radio. Dans le cas de boîtes de médicaments, la deuxième information sensible peut être l'adresse des officines où doivent être livrées les boîtes et qui doit être lue par un autre lecteur dans une chaîne de distribution des médicaments. Dans cette variante, l'étiquette T chiffre au moyen de l'opération réversible REV, paramétrée par les m' bits suivants les n + m premiers bits du coupon d'authentification tⱼ' courant calculé au cours de l'étape E21-7, la deuxième information sensible info_s2. Pour mémoire, si l'authentification du lecteur R par l'étiquette T a réussi, le coupon courant tⱼ' est égal au coupon d'authentification tⱼ du lecteur. On remarque que pour transmettre la deuxième information sensible info_s2 le masque utilisé consiste en les m' bits suivants les n + m premiers bits du coupon d'authentification tⱼ utilisés comme masque lors de l'envoi de l'information chiffrée zⱼ. En effet, il est connu que pour des raisons de sécurité, il est préférable, dans le cas d'une opération de OU EXCLUSIF de ne pas utiliser plusieurs fois le même masque, en l'espèce les mêmes n + m bits du coupon d'authentification tⱼ du lecteur utilisés lors de la transmission sécurisée du lecteur R vers l'étiquette T. Par ailleurs, il n'est pas utile d'utiliser la valeur de redondance padd, l'authentification de l'étiquette étant assurée par le protocole d'authentification de l'étiquette auprès du lecteur, en l'espèce à cryptoGPS.

On remarque qu'avec le procédé de l'invention il y a une mutualisation des échanges inhérents à l'authentification et à l'envoi d'informations sensibles entre les deux entités. En effet, une première information sensible info_s est transmise durant l'authentification du lecteur R auprès de l'étiquette T, et une deuxième information sensible info_s2 est transmise durant l'authentification de l'étiquette T auprès du lecteur R.

On comprend qu'en suivant ce principe, on peut de nouveau transmettre d'autres informations sensibles entre l'étiquette et le lecteur. On comprend également que dans l'exemple où l'opération réversible REV est une opération de OU EXCLUSIF la taille des coupons d'authentification tⱼ doit être importante, par exemple de l'ordre de 1024, ou 2048 bits. Plus précisément, la taille des coupons d'authentification du lecteur doit être dimensionnée en fonction de la taille des informations à transmettre et du nombre d'échanges sécurisés prévus.

Dans une variante de réalisation de l'invention, la donnée transmise du lecteur R à l'étiquette T au cours de l'étape E21-5 d'envoi et destinée à déterminer le deuxième index j peut être une valeur de compteur déduite de j mais différente de j, par exemple le j-ième état d'un registre à décalage LFSR (pour « Linear Feedback Shift Register ») initialisé avec une constante non nulle. Dans une deuxième variante, l'étiquette accède au deuxième index j, conformément à une règle de calcul de l'index connue de l'étiquette T et du lecteur. Dans une troisième variante, le lecteur R transmet à l'étiquette T uniquement les bits de poids faible du deuxième index j.

Dans l'exemple de réalisation décrit en relation avec la figure 2, le lecteur R mémorise une pluralité de coupons d'authentification tⱼ. Dans un autre exemple de réalisation de l'invention, le lecteur R récupère en temps réel les coupons d'authentification tⱼ du lecteur d'une entité de confiance, à travers un canal de confiance.

Dans les exemples de réalisation décrits précédemment, l'opération réversible REV consiste en un OU EXCLUSIF. L'invention n'est bien sûr pas limitée à cet exemple, et de nombreux algorithmes de chiffrement symétriques peuvent être utilisés. Dans un deuxième exemple de réalisation, l'opération réversible REV consiste en l'algorithme PRESENT ("PRESENT: An Ultra-Lightweighht Block Cipher", A. Bogdanov, L.R. Knudsen, G. Leander, C. Paar, A. Poschmann, M.J.B. Robshaw, Y. Seurin, and C. Vikkelsoe, in Proceedings of CHES 2007, volume 4727 of LNCS, pages 450-466). L'algorithme PRESENT est un algorithme de chiffrement par blocs très léger en termes d'implémentation. Il est adapté pour être utilisé dans des environnements contraints tels les étiquettes radio. Dans ce cas, le coupon d'authentification tⱼ du lecteur est appelé clé de chiffrement. Dans la variante décrite précédemment où l'information correspond à la valeur de redondance padd, alors l'étape E21-4 de chiffrement consiste à chiffrer la valeur de redondance padd au moyen de l'algorithme de chiffrement, paramétré par le coupon d'authentification tⱼ du lecteur.

Dans l'exemple de réalisation où l'opération réversible REV est un algorithme de chiffrement par blocs, les mêmes bits du coupon d'authentification tⱼ du lecteur qui sont utilisés comme clé de chiffrement de l'opération réversible REV peuvent être utilisés aussi bien pour transmettre une information de façon sécurisée du lecteur R à l'étiquette que de l'étiquette T au lecteur R. En effet, la sécurité inhérente aux algorithmes de chiffrement par blocs ne nécessite pas de modifier la clé de chiffrement à chaque envoi d'information sensible. Ainsi, dans le cas où l'opération réversible REV est un algorithme de chiffrement par blocs, la taille des coupons d'authentification tⱼ du lecteur n'est pas conditionnée par la taille de l'information à transmettre de manière sécurisée, ni le nombre d'échanges sécurisés entre le lecteur R et l'étiquette T. Par exemple, les coupons d'authentification du lecteur ont une taille de l'ordre de 80 ou 128 bits.

Dans un exemple de réalisation de l'invention, la première fonction FUNCTION utilisée pour la génération des coupons d'authentification tⱼ du lecteur est un algorithme de chiffrement par blocs, par exemple l'algorithme PRESENT, utilisé en mode « OFB » (de l'anglais « Output Feedback »). Un algorithme de chiffrement par blocs utilisé en mode OFB permet de produire une suite pseudo-aléatoire constituée des blocs produits par l'algorithme à chaque itération. Plus précisément, l'algorithme de chiffrement par blocs, paramétré par une clé secrète, ici la deuxième clé de régénération k', et appliqué à une valeur d'initialisation assimilée à un texte en clair, ici l'index j, produit dans une première itération un chiffré qui constitue un premier bloc d'une suite chiffrante, ou suite pseudo-aléatoire. Chacun des blocs de suite pseudo-aléatoire suivant est ensuite obtenu par une itération de l'algorithme de chiffrement par blocs à partir du chiffré obtenu au cours de l'itération précédente. Ainsi, la taille des suites pseudo-aléatoires produites, correspondant en l'espèce aux coupons d'authentification tⱼ du lecteur est paramétrable, fonction du nombre d'itérations choisi lors de la mise en œuvre de l'algorithme de chiffrement par blocs. Ce nombre d'itérations, et donc la taille des coupons tⱼ d'authentification du lecteur est à fixer selon les besoins d'une application qui met en œuvre le procédé d'authentification selon l'invention.

L'invention n'est pas limitée pour la fonction pseudo-aléatoire FUNCTION à l'algorithme de chiffrement par blocs PRESENT, ni au mode OFB. Ainsi, dans d'autres exemples de réalisation de l'invention des algorithmes connus tels que « 3DES » (pour triple "Data Encryption Standard"), ou "AES" (pour "Advanced Encryption Standard") peuvent être utilisés. Par ailleurs, les algorithmes de chiffrement par blocs peuvent être utilisés en mode « CTR » (de l'anglais « CounTeR », pour mode compteur). Enfin, dans un autre exemple de réalisation, la fonction FUNCTION peut être une deuxième fonction pseudo-aléatoire PRF'. Les algorithmes de chiffrement par blocs sont adaptés pour produire des coupons d'authentification du lecteur de taille importante. Ainsi, dans le cas où l'opération réversible REV est une opération de OU EXCLUSIF, la fonction FUNCTION est de préférence un algorithme de chiffrement par blocs.

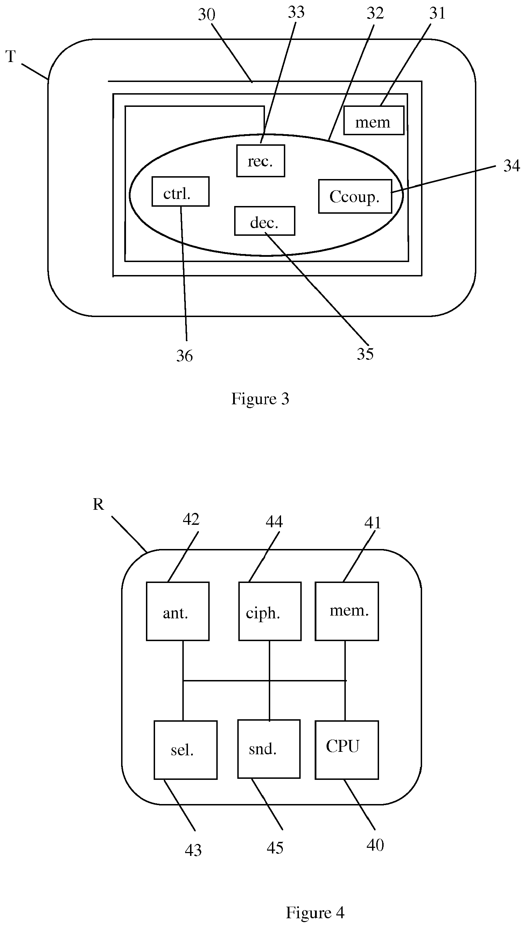

Une étiquette radio T selon un premier exemple de réalisation de l'invention va maintenant être décrite en relation avec la figure 3. L'étiquette T est adaptée pour dialoguer avec un lecteur radio (non représenté sur la figure 3) au cours d'une séquence d'authentification conforme aux étapes du procédé décrites précédemment.

Dans l'exemple particulier décrit ici, l'étiquette T est un dispositif passif recevant son énergie du lecteur radio lors d'une interrogation par celui-ci. L'étiquette T comprend :
- une antenne 30 adaptée pour envoyer au lecteur et recevoir du lecteur,
- des moyens de stockage 31, tels qu'une mémoire, adaptés pour stocker la clé secrète s du couple de clés GPS (s, V), la première clé de régénération k, la première fonction pseudo-aléatoire PRF, la seconde clé de régénération k', la fonction FUNCTION de génération des coupons d'authentification du lecteur, l'opération réversible REV, la valeur de redondance padd, et les coupons d'authentification xᵢ de l'étiquette lorsqu'ils sont pré-calculés,
- une puce de silicium 32 comprenant une pluralité de transistors adaptés pour constituer des portes logiques d'une logique câblée non programmable. La logique câblée définit :
   - des moyens 33 de réception, couplés à l'antenne 30, adaptés pour recevoir du lecteur l'information chiffrée zⱼ au moyen de l'opération réversible REV, paramétrée par le coupon d'authentification tⱼ du lecteur, ainsi qu'une donnée permettant de déterminer l'index j d'identification du coupon d'authentification du lecteur. Dans une variante, les moyens 33 de réception sont également agencés pour recevoir le défi c,
   - des moyens 34 de calcul d'un coupon courant d'authentification tⱼ' agencés pour calculer le coupon courant tⱼ' en appliquant la fonction FUNCTION, paramétrée par la deuxième clé de régénération k', à l'index j reçu du lecteur par les moyens 33 de réception,
   - des moyens 35 de déchiffrement, agencés pour déchiffrer l'information chiffrée zⱼ reçue par les moyens de réception 33. Les moyens 35 de déchiffrement sont agencés pour appliquer l'opération réversible REV, paramétrée par le coupon courant tⱼ' calculé par les moyens de calcul 34, à l'information chiffrée zⱼ,
   - des moyens de contrôle 36, agencés pour contrôler la valeur de redondance padd obtenue après déchiffrement de l'information chiffrée zⱼ par les moyens 35 de déchiffrement. Les moyens de contrôle 36 permettent de contrôler que l'authentification du lecteur a réussi.

Les moyens 34 de calcul d'un coupon courant sont agencés pour mettre en œuvre l'étape E21-7 de calcul d'un coupon d'authentification courant.

Les moyens 35 de déchiffrement sont adaptés pour mettre en œuvre l'étape E21-8 de déchiffrement.

Les moyens 36 de contrôle sont agencés pour mettre en œuvre l'étape E21-9 de contrôle.

Dans une variante de réalisation où l'étiquette s'authentifie auprès du lecteur, l'étiquette T comprend également :
- des moyens de sélection, non représentés sur la figure 3, adaptés pour sélectionner un indice i d'identification d'un coupon d'authentification xᵢ de l'étiquette,
- des moyens d'envoi, non représentés sur la figure 3, couplés à l'antenne 30, adaptés pour envoyer l'index i d'identification du coupon d'authentification xᵢ de l'étiquette, ledit index étant choisi par les moyens de sélection. Les moyens d'envoi sont également adaptés pour envoyer au lecteur une réponse y au défi c reçu du lecteur et calculée par des moyens d'authentification, non représentés sur le figure 3,
- les moyens d'authentification de l'étiquette, agencés pour régénérer l'aléa rᵢ et pour calculer une réponse y au défi reçu du lecteur R. Les moyens d'authentification ne sont mis en œuvre que si la vérification effectuée par les moyens de contrôle 36 est positive.

Dans une réalisation particulière de l'invention, non détaillée, l'étiquette T est un dispositif actif. L'étiquette T est alors équipée d'une batterie lui permettant d'émettre des signaux. Ainsi, l'étiquette T et le lecteur R peuvent interagir sur une distance plus importante que dans le cas où l'étiquette T est un dispositif passif qui reçoit son énergie du lecteur.

Un lecteur radio R selon un premier exemple de réalisation de l'invention va maintenant être décrit en relation avec la figure 4.

Le lecteur radio R est un dispositif actif, émetteur de radio fréquences qui active une étiquette (non représentée sur la figure 4) qui passe à sa proximité en lui fournissant une énergie dont elle a besoin. Le lecteur R selon l'invention est adapté pour dialoguer avec l'étiquette au cours d'une séquence d'authentification conforme aux étapes du procédé selon l'invention décrites précédemment.

Le lecteur R comprend plusieurs modules :
- une unité de traitement 40, ou "CPU" (de l'anglais "Control Processing Unit"),
- un ensemble 41 de mémoires, dont une mémoire volatile, ou "RAM" (pour "Random Access Memory") utilisée pour exécuter des instructions de code, stocker des variables, etc., et une mémoire réinscriptible de type « EEPROM » pour « Electrically-Erasable Programmable Read-Only Memory » adaptée pour mémoriser les coupons d'authentification tⱼ du lecteur, la valeur de redondance padd,

- une antenne 42, adaptée pour émettre et recevoir sur la voie radio,
- un module 43 de sélection de coupons, agencé pour obtenir le coupon d'authentification tⱼ du lecteur,
- un module 44 de chiffrement, agencé pour appliquer l'opération réversible REV, paramétrée par le coupon d'authentification tⱼ du lecteur récupéré par le module 43 de sélection, à une information comprenant au moins la valeur de redondance padd,
- un module d'envoi 45, couplé à l'antenne 42, agencé pour envoyer à l'étiquette l'information chiffrée par le module de chiffrement 44, le défi c généré par le module 45 de génération d'un défi et une donnée permettant de déterminer un index d'identification du coupon d'authentification du lecteur,

Dans une variante de réalisation, non représentée sur la figure 4, dans laquelle le lecteur authentifie l'étiquette, le lecteur R comprend également :
- un module d'authentification, agencé pour authentifier l'étiquette.
- un module de réception, couplé à l'antenne 42 et agencé pour recevoir de l'étiquette une donnée permettant de déterminer un index i d'identification d'un coupon d'authentification du lecteur tⱼ, choisi par l'étiquette, et pour recevoir un coupon d'authentification xᵢ de l'étiquette. Ils sont agencés également pour recevoir de l'étiquette la réponse y au défi c,
- un module de génération d'un défi, agencé pour générer aléatoirement un défi c.

Dans une variante de réalisation de l'invention, le lecteur R comprend des moyens de communication (non représentés) avec l'entité de calcul, adaptés pour demander et recevoir un coupon pour une authentification courante.

Les modules communiquent via un bus de communication.

Les modules de sélection d'un coupon 43, d'envoi 45, et de chiffrement 44 sont de préférence des modules logiciels comprenant des instructions logicielles pour faire exécuter les étapes du procédé d'authentification mutuelle décrit en relation avec la figure 2.

Le module 43 de sélection d'un coupon est agencé pour mettre en œuvre l'étape E21-2 de réception précédemment décrite. Le module 44 de chiffrement est agencé pour mettre en œuvre l'étape E21-5 de chiffrement. Le module d'envoi 45 est agencé pour mettre en oeuvre l'étape E21-5 d'envoi.

L'invention concerne aussi :
- un programme d'ordinateur comportant des instructions pour la mise en œuvre du procédé d'authentification mutuelle d'une étiquette et d'un lecteur tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

L'invention porte également sur un système radio comprenant au moins une étiquette T décrite en relation avec la figure 3, et un lecteur R décrit en relation avec la figure 4.

## Revendications

1. Procédé d'authentification d'un lecteur (R) par une étiquette radio (T), comprenant les étapes suivantes, mises en œuvre par l'étiquette :
- une étape (E21-6) de réception en provenance du lecteur d'une information chiffrée (zⱼ) et d'une donnée permettant de déterminer un index (j) d'identification d'un coupon d'authentification (tⱼ) du lecteur, ladite information chiffrée ayant été calculée par le lecteur en appliquant une opération réversible (REV) au coupon d'authentification du lecteur associé à l'index et à une information comprenant une valeur de redondance (padd),
- une opération (E21-7) de calcul d'un coupon courant d'authentification du lecteur (tⱼ') en fonction de l'index (j) déterminé à partir de la donnée reçue,
- une opération (E21-8) de déchiffrement de l'information chiffrée reçue au moyen de l'opération réversible, appliquée au coupon courant d'authentification calculé et à l'information reçue chiffrée,
- une opération (E21-9) de contrôle de l'information déchiffrée destinée à vérifier que le coupon courant calculé par l'étiquette correspond au coupon d'authentification utilisé par le lecteur pour chiffrer la valeur de redondance.

2. Procédé d'authentification d'un lecteur (R) auprès d'une étiquette radio (T) comprenant les étapes suivantes, mises en œuvre par le lecteur :
- une étape (E21-2) de sélection d'un coupon d'authentification (tⱼ) du lecteur associé à un index (j),
- une étape (E21-4) de chiffrement d'une information calculée en appliquant une opération réversible (REV) au coupon d'authentification du lecteur associé à l'index et à une information comprenant une valeur de redondance,
- une étape (E21-5) d'envoi à l'étiquette de l'information chiffrée (zⱼ) et d'une donnée permettant de déterminer l'index (j) du coupon d'authentification du lecteur
- une étape d'authentification selon la revendication 1 du lecteur par l'étiquette.

3. Procédé selon la revendication 1, ou la revendication 2, comprenant :
- une étape (E21-1) de transmission par l'étiquette au lecteur d'un coupon d'authentification (xᵢ) de l'étiquette pré-calculé et d'une donnée permettant de déterminer un index (i) d'identification du coupon d'authentification de l'étiquette,
- une étape (E22-1) de finalisation de l'authentification de l'étiquette, ladite étape de finalisation n'étant exécutée que si le coupon courant (tⱼ') calculé correspond au coupon d'authentification (tⱼ) utilisé par le lecteur pour paramétrer l'opération réversible.

4. Procédé d'authentification selon l'une des revendications précédentes, dans lequel l'information comprend une valeur de redondance de n bits, avec n ≥ 1.

5. Procédé d'authentification selon l'une des revendications 1 à 3, dans lequel l'information comprend une information sensible (info_s) de m bits, concaténée à une valeur de redondance de n bits, avec n ≥ 1 et m ≥ 0.

6. Procédé d'authentification selon l'une des revendications précédentes, dans lequel l'opération réversible (REV) consiste en un OU EXCLUSIF entre le coupon d'authentification du lecteur et l'information comprenant la valeur de redondance.

7. Procédé d'authentification selon l'une des revendications 1 à 5, dans lequel l'opération réversible (REV) est l'algorithme de chiffrement par blocs PRESENT, paramétré par le coupon d'authentification du lecteur et appliqué à l'information comprenant la valeur de redondance.

8. Procédé selon la revendication 6, dans lequel un défi (c) est transmis par le lecteur avec ladite information chiffrée et la donnée permettant de déterminer un index (j) d'identification d'un coupon d'authentification (tⱼ) du lecteur et est reçu par l'étiquette, l'étape de finalisation de l'authentification de l'étiquette comprenant l'envoi (E22-1) d'une réponse (y), fonction du défi.

9. Procédé selon la revendication 6, dans lequel l'étape de finalisation de l'authentification de l'étiquette comprend, lorsque le coupon courant d'authentification (tⱼ') du lecteur comprend de premiers n + m bits suivis de m' deuxièmes bits :
- une étape de transmission de l'étiquette au lecteur d'une deuxième information sensible (info_s2) de m' bits, l'étape de transmission comprenant :
- une opération de OU EXCLUSIF entre les m' deuxièmes bits du coupon d'authentification courant du lecteur et les m' bits de la deuxième information,
- une étape d'envoi de la deuxième information sensible chiffrée.

10. Procédé selon la revendication 7, dans lequel l'étape de finalisation de l'authentification de l'étiquette comprend :
- une étape de transmission d'une deuxième information sensible (info_s2) de l'étiquette au lecteur, l'étape de transmission comprenant :
- une application de l'algorithme de chiffrement PRESENT, au coupon d'authentification (tⱼ') du lecteur et à la deuxième information sensible,
- une étape d'envoi au lecteur de la deuxième information sensible chiffrée.

11. Procédé d'authentification selon l'une des revendications précédentes, dans lequel le coupon d'authentification du lecteur (tⱼ) est obtenu par application d'un algorithme de chiffrement par blocs en mode OFB, paramétré par une clé de régénération (k'), à l'index (j).

12. Etiquette radio (T) adaptée pour authentifier un lecteur radio (R) et pour s'authentifier auprès d'un lecteur radio, ladite étiquette comprenant :
- des moyens de réception (33, 30), agencés pour recevoir en provenance du lecteur une information chiffrée (zⱼ) et une donnée permettant de déterminer un index (j) d'identification du coupon d'authentification (tⱼ) du lecteur, ladite information chiffrée ayant été calculée par le lecteur en appliquant une opération réversible (REV) au coupon d'authentification du lecteur associé à l'index et à une information comprenant une valeur de redondance,
- des moyens de calcul (34), agencés pour calculer un coupon courant d'authentification du lecteur (tⱼ') en fonction de l'index (j) déterminé à partir de la donnée reçue,
- des moyens de déchiffrement (35), agencés pour déchiffrer l'information reçue chiffrée au moyen de l'opération réversible appliquée au coupon courant d'authentification calculé et à l'information chiffrée,
- des moyens de contrôle (36), agencés pour contrôler l'information déchiffrée et vérifier que le coupon courant calculé par l'étiquette correspond au coupon d'authentification utilisé pour chiffrer la valeur de redondance.

13. Système d'authentification radio comprenant :
- un lecteur radio (R) adapté pour s'authentifier auprès d'au moins une étiquette radio (T) et pour authentifier l'étiquette, ledit lecteur comprenant :
- des moyens de sélection (43), agencés pour sélectionner un coupon d'authentification (tⱼ) du lecteur associé à un index (j),
- des moyens de chiffrement (44), agencés pour chiffrer une information en appliquant une opération réversible (REV) au coupon d'authentification du lecteur et à une information comprenant une valeur de redondance,
- des moyens d'envoi (42, 45), agencés pour envoyer à l'étiquette l'information chiffrée (zⱼ) et une donnée permettant de déterminer l'index (j) du coupon d'authentification du lecteur,
- au moins une étiquette radio selon la revendication 12.

14. Programme d'ordinateur destiné à être installé dans une mémoire d'un lecteur radio, comprenant des instructions pour la mise en œuvre des étapes du procédé d'authentification mutuelle d'une étiquette radio et d'un lecteur selon l'une des revendications 2 à 11 qui sont exécutées par le lecteur, lorsque le programme est exécuté par un processeur.

## Patentansprüche

1. Verfahren zur Authentifizierung eines Lesegeräts (R) durch ein Funketikett (T),
umfassend die folgenden Schritte, die vom Etikett durchgeführt werden:
- einen Schritt (E21-6) des Empfangens, vom Lesegerät, einer verschlüsselten Information (zⱼ) und eines Datenelements, das es gestattet, einen Index (j) zur Identifizierung eines Authentifizierungskupons (tⱼ) des Lesegeräts zu bestimmen, wobei die verschlüsselte Information vom Lesegerät unter Anwendung einer umkehrbaren Operation (REV) auf den Authentifizierungskupon des Lesegeräts, der dem Index zugeordnet ist, und auf eine Information, die einen Redundanzwert (padd) umfasst, berechnet wurde,
- einen Schritt (E21-7) des Berechnens eines aktuellen Authentifizierungskupons des Lesegeräts (tⱼ') in Abhängigkeit von dem Index (j), der anhand des empfangenen Datenelements bestimmt wird,
- eine Operation (E21-8) des Entschlüsselns der empfangenen verschlüsselten Information mittels der umkehrbaren Operation, die auf den berechneten aktuellen Authentifizierungskupon und die verschlüsselte empfangene Information angewandt wird,
- einen Schritt (E21-9) des Kontrollierens der entschlüsselten Information, der dazu bestimmt ist, zu überprüfen, dass der aktuelle Kupon, der vom Etikett berechnet wird, dem Authentifizierungskupon entspricht, der vom Lesegerät genutzt wird, um den Redundanzwert zu verschlüsseln.

2. Verfahren zur Authentifizierung eines Lesegeräts (R) bei einem Funketikett (T) umfassend die folgenden Schritte, die vom Lesegerät durchgeführt werden:
- einen Schritt (E21-2) des Auswählens eines Authentifizierungskupons (tⱼ) des Lesegeräts, der einem Index (j) zugeordnet ist,
- einen Schritt (E21-4) des Verschlüsselns einer Information, die unter Anwendung einer umkehrbaren Operation (REV) auf den Authentifizierungskupon des Lesegeräts, der dem Index zugeordnet ist, und auf eine Information, die einen Redundanzwert umfasst, berechnet wurde,
- einen Schritt (E21-5) des Sendens, an das Etikett, der verschlüsselten Information (z_{J}) und eines Datenelements, das es gestattet, den Index (j) des Authentifizierungskupons des Lesegeräts zu bestimmen, einen Schritt des Authentifizierens nach Anspruch 1 des Lesegeräts durch das Etikett.

3. Verfahren nach Anspruch 1 oder 2, umfassend:
- einen Schritt (E21-1) des Übertragens, durch das Etikett an das Lesegerät, eines vorberechneten Authentifizierungskupons (x₁) des Lesegeräts und eines Datenelements, das es gestattet, einen Index (i) zur Identifizierung des Authentifizierungskupons des Etiketts zu bestimmen,
- einen Schritt (E22-1) des Fertigstellens der Authentifizierung des Etiketts, wobei der Schritt des Fertigstellens nur dann ausgeführt wird, wenn der berechnete aktuelle Kupon (tⱼ') dem Authentifizierungskupon (tⱼ) entspricht, der vom Lesegerät genutzt wird, um die umkehrbare Operation zu parametrieren.

4. Authentifizierungsverfahren nach einem der vorhergehenden Ansprüche, wobei die Information einen Redundanzwert von n Bits umfasst, wobei n ≥ 1.

5. Authentifizierungsverfahren nach einem der Ansprüche 1 bis 3, wobei die Information eine sensible Information (info_s) von m Bits umfasst, die mit einem Redundanzwert von n Bits verknüpft wird, wobei n ≥ 1 und m ≥ 0.

6. Authentifizierungsverfahren nach einem der vorhergehenden Ansprüche, wobei die umkehrbare Operation (REV) aus einem EXKLUSIVEN ODER zwischen dem Authentifizierungskupon des Lesegeräts und der Information, die den Redundanzwert umfasst, besteht.

7. Authentifizierungsverfahren nach einem der Ansprüche 1 bis 5, wobei die umkehrbare Operation (REV) der Algorithmus zur blockweisen Verschlüsselung PRESENT ist, der vom Authentifizierungskupon des Lesegeräts parametriert wird und auf die Information, die den Redundanzwert umfasst, angewandt wird.

8. Verfahren nach Anspruch 6, wobei eine Challenge (c) vom Lesegerät mit der verschlüsselten Information und dem Datenelement, das es gestattet, einen Index (j) zur Identifizierung eines Authentifizierungskupons (tⱼ) des Lesegeräts zu bestimmen, übertragen und vom Etikett empfangen wird, wobei der Schritt des Fertigstellens der Authentifizierung des Etiketts das Senden (E22-1) einer Antwort (y) umfasst, die von der Challenge abhängig ist.

9. Verfahren nach Anspruch 6, wobei der Schritt des Fertigstellens der Authentifizierung des Etiketts Folgendes umfasst, wenn der aktuelle Authentifizierungskupon (tⱼ') des Lesegeräts erste n + m Bits umfasst, auf die m' zweite Bits folgen:
- einen Schritt des Übertragens, vom Etikett an das Lesegerät, einer zweiten sensiblen Information (info_s2) von m' Bits, der Schritt des Übertragens umfassend:
- eine Operation eines EXKLUSIVEN ODERS zwischen den m' zweiten Bits des aktuellen Authentifizierungskupons des Lesegeräts und den m' Bits der zweiten Information,
- einen Schritt des Sendens der verschlüsselten zweiten sensiblen Information.

10. Verfahren nach Anspruch 7, wobei der Schritt des Fertigstellens der Authentifizierung des Etiketts Folgendes umfasst:
- einen Schritt des Übertragens einer zweiten sensiblen Information (info_s2) vom Etikett an das Lesegerät, der Schritt des Übertragens umfassend:
- eine Anwendung des Verschlüsselungsalgorithmus PRESENT auf den Authentifizierungskupon (tⱼ') des Lesegeräts und auf die zweite sensible Information,
- einen Schritt des Sendens der verschlüsselten zweiten sensiblen Information an das Lesegerät.

11. Authentifizierungsverfahren nach einem der vorhergehenden Ansprüche, wobei der Authentifizierungskupon des Lesegeräts (tⱼ) durch Anwendung eines Algorithmus zur blockweisen Verschlüsselung im OFB-Modus, der von einem Neuerzeugungsschlüssel (k') parametriert wird, auf den Index (j) bezogen wird.

12. Funketikett (T), das geeignet ist, ein Funklesegerät (R) zu authentifizieren und sich bei einem Funklesegerät zu authentifizieren, das Etikett umfassend:
- Empfangsmittel (33, 30), die angeordnet sind, von dem Lesegerät eine verschlüsselte Information (zⱼ) und ein Datenelement, das es gestattet, einen Index (j) zur Identifizierung des Authentifizierungskupons (tⱼ) des Lesegeräts zu bestimmen, zu empfangen, wobei die verschlüsselte Information vom Lesegerät unter Anwendung einer umkehrbaren Operation (REV) auf den Authentifizierungskupon des Lesegeräts, der dem Index zugeordnet ist, und auf eine Information, die einen Redundanzwert umfasst, berechnet wurde,
- Rechenmittel (34), die angeordnet sind, einen aktuellen Authentifizierungskupon des Lesegeräts (tⱼ') in Abhängigkeit vom Index (j), der anhand des empfangenen Datenelements bestimmt wird, zu berechnen,
- Entschlüsselungsmittel (35), die angeordnet sind, die verschlüsselte empfangene Information mittels der umkehrbaren Operation zu entschlüsseln, die auf den berechneten aktuellen Authentifizierungskupon und die verschlüsselte Information angewandt wird,
- Kontrollmittel (36), die angeordnet sind, die entschlüsselte Information zu kontrollieren, und zu überprüfen, dass der aktuelle Kupon, der vom Etikett berechnet wird, dem Authentifizierungskupon entspricht, der vom Lesegerät genutzt wird, um den Redundanzwert zu verschlüsseln.

13. Funkauthentifizierungssystem umfassend:
- ein Funklesegerät (R), das geeignet ist, sich bei mindestens einem Funketikett (T) zu authentifizieren und das Etikett zu authentifizieren, das Lesegerät umfassend:
- Auswahlmittel (43), die angeordnet sind, einen Authentifizierungskupon (tⱼ) des Lesegeräts auszuwählen, der einem Index (j) zugeordnet ist,
- Verschlüsselungsmittel (44), die angeordnet sind, eine Information unter Anwendung einer umkehrbaren Operation (REV) auf den Authentifizierungskupon des Lesegeräts und auf eine Information, die einen Redundanzwert umfasst, zu verschlüsseln,
- Sendemittel (42, 45), die angeordnet sind, die verschlüsselte Information (zⱼ) und ein Datenelement, das es gestattet, den Index (j) des Authentifizierungskupons des Lesegeräts zu bestimmen, an das Etikett zu senden,
- mindestens ein Funketikett nach Anspruch 12.

14. Computerprogramm, das dazu bestimmt ist, in einem Speicher eines Funklesegeräts installiert zu sein, umfassend Anweisungen für die Durchführung der Schritte des Verfahrens zur gegenseitigen Authentifizierung eines Funketiketts und eines Lesegeräts nach einem der Ansprüche 2 bis 11, die vom Lesegerät ausgeführt werden, wenn das Programm von einem Prozessor ausgeführt wird.

## Claims

1. Method for authenticating a reader (R) by means of a radio tag (T),
comprising the following steps, which are implemented by the tag:
- a step (E21-6) of receiving, from the reader, encrypted information (zⱼ) and a datum allowing determination of an identification index (j) of an authentication coupon (tⱼ) of the reader, said encrypted information having been calculated by the reader by applying a reversible operation (REV) to the authentication coupon of the reader associated with the index and to information comprising a redundancy value (padd),
- an operation (E21-7) of calculating a current authentication coupon of the reader (tⱼ') on the basis of the index (j) determined from the received datum,
- an operation (E21-8) of decrypting the received encrypted information by means of the reversible operation, applied to the calculated current authentication coupon and to the received encrypted information,
- an operation (E21-9) of checking the decrypted information intended to verify that the current coupon calculated by the tag corresponds to the authentication coupon used by the reader to encrypt the redundancy value.

2. Method for authenticating a reader (R) to a radio tag (T), comprising the following steps, which are implemented by the reader:
- a step (E21-2) of selecting an authentication coupon (tⱼ) of the reader associated with an index (j),
- a step (E21-4) of encrypting calculated information by applying a reversible operation (REV) to the authentication coupon of the reader associated with the index and to information comprising a redundancy value,
- a step (E21-5) of sending to the tag the encrypted information (zⱼ) and a datum allowing determination of the index (j) of the authentication coupon of the reader,
- a step of authenticating the reader by means of the tag according to Claim 1.

3. Method according to Claim 1 or Claim 2, comprising:
- a step (E21-1) of transmitting from the tag to the reader a pre-calculated authentication coupon (xᵢ) of the tag and a datum allowing determination of an identification index (i) of the authentication coupon of the tag,
- a step (E22-1) of finalizing the authentication of the tag, said finalization step being executed only if the calculated current coupon (tⱼ') corresponds to the authentication coupon (tⱼ) used by the reader to parameterize the reversible operation.

4. Authentication method according to one of the preceding claims, in which the information comprises an n-bit redundancy value, where n ≥ 1.

5. Authentication method according to one of Claims 1 to 3, in which the information comprises m-bit sensitive information (info_s), concatenated with an n-bit redundancy value, where n ≥ 1 and m ≥ 0.

6. Authentication method according to one of the preceding claims, in which the reversible operation (REV) consists of an EXCLUSIVE-OR between the authentication coupon of the reader and the information comprising the redundancy value.

7. Authentication method according to one of Claims 1 to 5, in which the reversible operation (REV) is the PRESENT block cipher algorithm, parameterized by the authentication coupon of the reader and applied to the information comprising the redundancy value.

8. Method according to Claim 6, in which a challenge (c) is transmitted by the reader with said encrypted information and the datum allowing determination of an identification index (j) of an authentication coupon (tⱼ) of the reader and is received by the tag, the step of finalizing the authentication of the tag comprising sending (E22-1) a response (y), on the basis of the challenge.

9. Method according to Claim 6, in which the step of finalizing the authentication of the tag comprises, when the current authentication coupon (tⱼ') of the reader comprises n + m first bits followed by m' second bits:
- a step of transmitting m'-bit second sensitive information (info_s2) from the tag to the reader, the transmission step comprising:
- an EXCLUSIVE-OR operation between the m' second bits of the current authentication coupon of the reader and the m' bits of the second information,
- a step of sending the encrypted second sensitive information.

10. Method according to Claim 7, in which the step of finalizing the authentication of the tag comprises:
- a step of transmitting second sensitive information (info_s2) from the tag to the reader, the transmission step comprising:
- applying the PRESENT cipher algorithm to the authentication coupon (tⱼ') of the reader and to the second sensitive information,
- a step of sending the encrypted second sensitive information to the reader.

11. Authentication method according to one of the preceding claims, in which the authentication coupon of the reader (tⱼ) is obtained by applying a block cipher algorithm in OFB mode, parameterized by a regeneration key (k'), to the index (j).

12. Radio tag (T) adapted to authenticate a radio reader (R) and to authenticate itself to a radio reader, said tag comprising:
- receiving means (33, 30), designed to receive, from the reader, encrypted information (zⱼ) and a datum allowing determination of an identification index (j) of the authentication coupon (tⱼ) of the reader, said encrypted information having been calculated by the reader by applying a reversible operation (REV) to the authentication coupon of the reader associated with the index and to information comprising a redundancy value,
- calculating means (34), designed to calculate a current authentication coupon of the reader (tⱼ') on the basis of the index (j) determined from the received datum,
- decrypting means (35), designed to decrypt the received encrypted information by means of the reversible operation applied to the calculated current authentication coupon and to the encrypted information,
- checking means (36), designed to check the decrypted information and to verify that the current coupon calculated by the tag corresponds to the authentication coupon used to encrypt the redundancy value.

13. Radio authentication system comprising:
- a radio reader (R) adapted to authenticate itself to at least one radio tag (T) and to authenticate the tag, said reader comprising:
- selecting means (43), designed to select an authentication coupon (tⱼ) of the reader associated with an index (j),
- encrypting means (44), designed to encrypt information by applying a reversible operation (REV) to the authentication coupon of the reader and to information comprising a redundancy value,
- sending means (42, 45), designed to send to the tag the encrypted information (zⱼ) and a datum allowing determination of the index (j) of the authentication coupon of the reader,
- at least one radio tag according to Claim 12.

14. Computer program intended to be installed in a memory of a radio reader, comprising instructions for implementing the steps of the method for mutual authentication of a radio tag and a reader according to one of Claims 2 to 11, which are executed by the reader when the program is executed by a processor.
